# EUROPEAN PATENT SPECIFICATION

(11) **EP 1 827 972 B1**
(45) Date of publication and mention of the grant of the patent: **10.09.2008**
(21) Application number: 05813078.2
(22) Date of filing: 30.11.2005
(51) Int. Cl.: B64C 9/18, B64C 39/02

(54) **AIRCRAFT LANDING METHOD AND DEVICE**
FLUGZEUGLANDEVERFAHREN UND -VORRICHTUNG
PROCEDE ET DISPOSITIF D'ATTERRISSAGE D'AERONEF

(30) Priority: 30.11.2004 IL 16546904
(43) Date of publication of application: 05.09.2007
(73) Proprietor: ISRAEL AIRCRAFT INDUSTRIES, LTD., Lod 70 100 (IL)
(72) Inventor: SIRKIS, Omri, 52363 Ramat-Gan (IL)
(74) Representative: Reitstötter - Kinzebach
(86) International application number: PCT/IL2005/001276
(87) International publication number: WO 2006/059324

(56) References cited:
- US-A- 4 194 708
- US-A- 5 035 382
- US-A- 6 119 976
- US-A1- 2002 074 454
- US-B1- 6 565 041

## Description

### FIELD OF THE INVENTION

This invention relates to landing methods of fixed-wing aircraft, in particular to Unmanned Aerial Vehicles (UAV) carrying a payload under the wing.

### BACKGROUND OF THE INVENTION

UAVs find wide application for military and civilian purposes, mainly as reconnaissance platforms. Usually an UAV carries payloads including sensors or optical cameras to scan the earth surface. The most natural location of the sensors is under the wing or fuselage of the aircraft. Such location however poses a problem at landing since the payload must be protected from collision with the earth surface. Very often, the UAVs are required to land on unprepared terrain.

*Phoenix* UAV was developed by BAE Systems, UK. The air vehicle carries a mission pod (a container with instruments) mounted on the underside of the fuselage. For landing, a drogue parachute, installed in the tail of the fuselage, is connected to a spring loaded tail cone ejection plate. The tail cone is ejected to extract the drogue parachute and the engine stops with the propeller in horizontal position. During descent, the air vehicle inverts so the vehicle lands on its upper surface to protect the mission pod. The force of the landing is absorbed by an air bag and frangible fin tips.

*Pointer* FQM-151A is an UAV developed by AeroVironment, USA. Upon landing the *Pointer* performs a deep stall and falls vertically, retaining its equilibrium to land softly.

*Dragon Eye* is a mini-UAV developed by the US Navy and Marine Corps laboratories. The air vehicle is powered by an electric motor which drives two wing-mounted propellers. It is launched either by hand or with the help of a bungee cord, and is recovered by an autopilot-controlled deep stall terminal descent finishing in belly landing.

Elbit Systems (Israel) has developed the *Skylark* miniature UAV. Launching is performed by the use of a bungee-type elastic chord and recovery is through a pre-programmed automatic system that brings the air vehicle within a few meters of the operator, then puts it into a deep stall and actuates an airbag that cushions the vehicle's impact.

### SUMMARY OF THE INVENTION

In accordance with the present invention, there is provided a method for landing a fixed-wing aircraft adapted to carry a payload adjacent to the lower surface of aircraft's wing or fuselage, the method comprising
a) first maneuver of the aircraft to assume inverted flight position;
b) second maneuver of the aircraft to enter deep stall descent in inverted flight; and
c) landing on the back (upper surface) of said aircraft, so as to protect said payload from impact with the landing terrain.

Where the aircraft is self-propelled, the method further comprises stopping the aircraft propeller.

The first maneuver may comprise one of the following: upward half loop, downward half loop and roll.

The first and the second maneuvers may be performed with overlapping in time.

The aircraft may comprise at least one aerodynamic control surface (landing flap) specially designed for performing the first and/or the second maneuver.

Preferably, the landing flap constitutes part of the lower surface of the fixed wing.

The method is preferably applied for aircraft of the flying wing type.

In accordance with a second aspect of the present invention, there is provided an aerodynamic arrangement for an aircraft of the flying-wing type, for performing the above method of landing. The arrangement comprises at least one landing flap pivotally mounted to the wing. The landing flap, in normal flight of said aircraft, is fixed flush with the lower surface of the wing, and is capable, when released, to assume an open position such that the aerodynamic forces acting on the wing and the landing flap would bring the aircraft to an inverted position and deep-stall descent, so that said aircraft can land on its back.

Preferably, the landing flap is formed so that, after being released, it rotates backwards to assume the open position, more preferably only under the action of the incoming air flow.

The aerodynamic arrangement further comprises means for stopping the landing flap in the open position, such as a flexible element connecting the landing flap and the wing. This element may be a simple rope.

Preferably, the landing flap has surface measuring from 25 to 35% of the flying wing surface and pivots by about 140° from its normal flight position to the open position.

The landing flap may be formed as a single control surface in the center of the wing, or as two control surfaces, one on each half-wing.

The inventive method provides for landing in inverted position where the upper structure of the aircraft (back of the fuselage or of the wing) absorbs the impact force of landing and prevents destruction of the payload. The aircraft need not to carry landing gear such as undercarriage, skids, airbags or parachute. The payload does not need special and heavy means of protection or mechanisms for withdrawal from its operating position under the fuselage.

The inventive landing flap does not compromise the aerodynamic quality of the wing during normal flight; it is very light and does not need driving mechanisms to assume its open position. The inventor has discovered that, after opening of the flap, the flying wing aircraft tends to assume inverted position and to descend steadily in deep stall not only from horizontal flight but from any state such as spin.

According to the invention, a method for landing a fixed wing aircraft is provided in which an inversion maneuver is performed so that the aircraft's back or upper surface is facing the ground, and the aircraft's belly or underside is facing in a direction generally away from the ground. After initiation or completion of this maneuver, deep stall is induced, and the aircraft descends almost vertically to land on its upper side, thus minimizing impact loads or damage on its underside. The inversion maneuver may be carried out, at least in part, while the aircraft is, for example, in powered flight, or in a flight regime where the aircraft control and aerodynamic surfaces are operating normally. In a particular aerodynamic arrangement configured for carrying out the method, a flap, which may be stowed during normal flight, is deployed in a manner such as to aerodynamically induce a suitable turning moment, including, e.g., an appropriate positive or negative pitching or rolling moment on the aircraft, and deep stall.

### BRIEF DESCRIPTION OF THE DRAWINGS

In order to understand the invention and to see how it may be carried out in practice, a preferred embodiment will now be described, by way of nonlimiting example only, with reference to the accompanying drawings, in which:
**Figs. 1A, 1B** and **1C** are, respectively, plan view (from below), rear view and side view of a flying-wing UAV according to the present invention.
**Figs. 2A** and **2B** show the UAV of Fig. 1 when opening a landing flap, in plan view (from below) and side view, respectively.
**Figs. 3A** and **3B** show a side view of the UAV of Fig.1 performing a half loop maneuver and deep-stall landing after opening the landing flap.

### DETAILED DESCRIPTION OF THE INVENTION

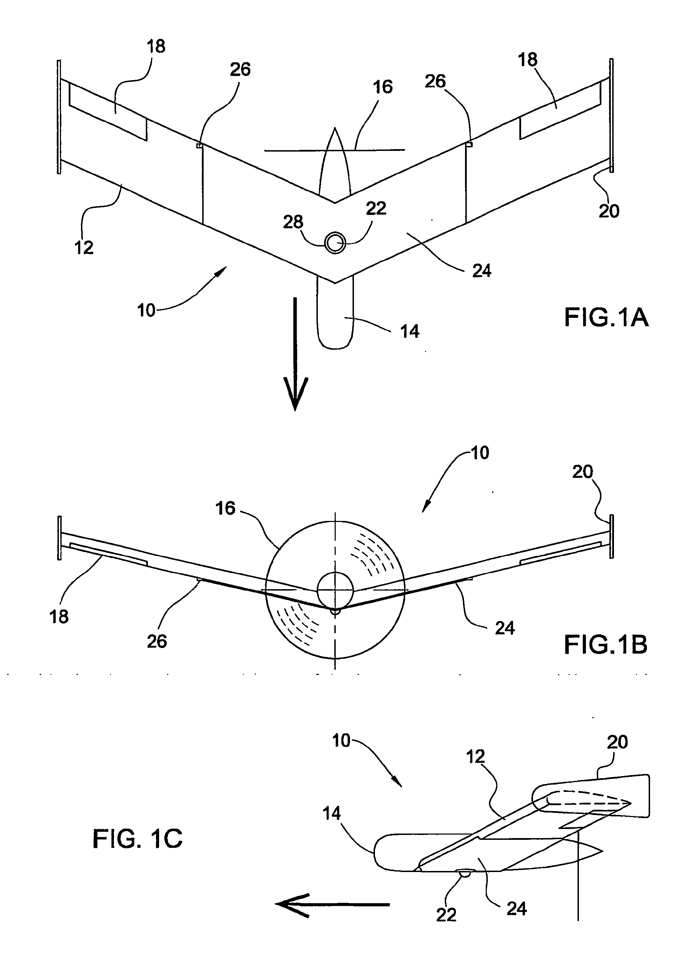

With reference to Figs. 1A, 1B and 1C, there is shown an Unmanned Air Vehicle (UAV) 10 of the flying wing type comprising a lifting wing 12, a fuselage 14 and an engine (not shown) with pushing propeller 16. The lifting wing 12 has elevons 18 and tip fins 20.

The UAV carries a payload in the fuselage 14, for example an optical camera with lens 22 disposed at the underside of the fuselage.

The UAV is equipped with a control surface (landing flap) 24 pivoted in hinges 26 at the trailing edge of the wing 12. The flap 24 occupies the central part of the wing 12 and in closed state is flush with the lower surface of the wing. The flap area is about 30% of the flying wing area. A special port or transparent window 28 is provided for the camera lens 22. The hinges 26 define a pivoting axis transverse to the flight direction. In normal flight, the landing flap is locked in the closed state by a servomechanism.

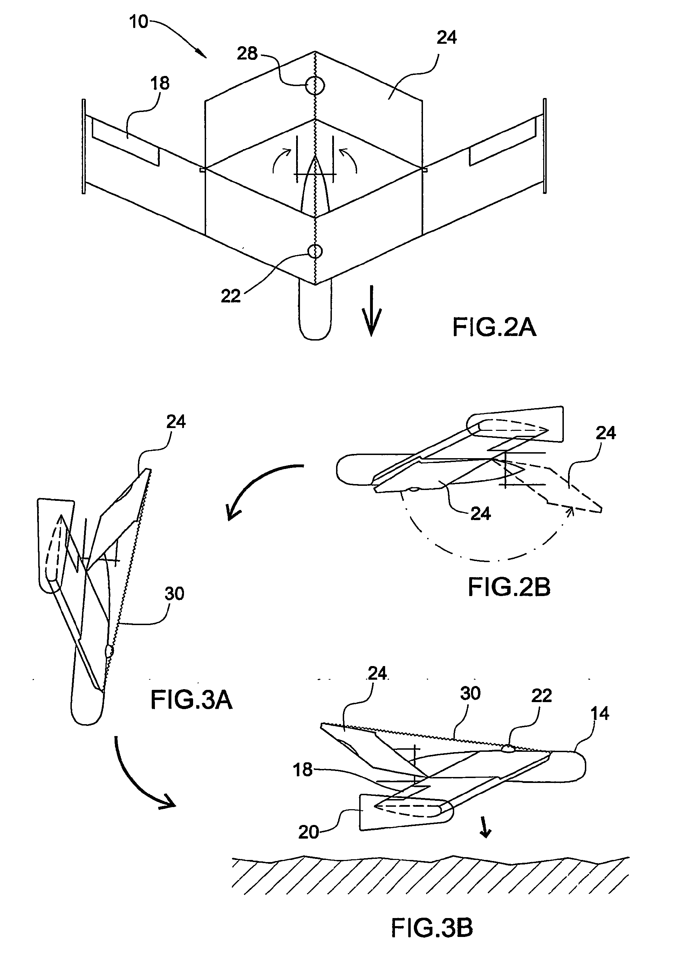

With reference to Figs. 2A and 2B, before landing, the UAV drops its speed, stops the engine and the propeller blades collapse. The landing flap 24 is unlocked and opened by the suction action of the incoming flow (it may be also spring-loaded). The airflow turns the flap to its extreme open position where a retaining means such as a simple rope 30 stops the flap at about 140° from its normal flight position.

As illustrated in Figs. 3A and 3B, after the flap opening, the flow around the wing transforms in such a way that the aircraft performs a downward half loop and assumes an inverted flight position. The ground speed is thus drastically reduced, and from this position, the UAV descends almost vertically towards the land, in deep stall. A small horizontal velocity component is preserved, so that the aircraft roll angle still may be controlled by means of the elevons 18. The UAV lands on its back and on the wing tips or on tip fins, depending on the configuration.

Although a description of a specific UAV and landing flap embodiment has been presented, it is contemplated that various changes could be made without deviating from the scope of the present invention. For example, the landing flap may be formed as two halves, each attached to one half-wing of the vehicle. The hinges may be displaced aft of the trailing edge to create larger leverage for the aerodynamic forces on the flap, thus permitting smaller flap area. Alternatively, the hinges may be displaced forwards, depending on the wing sweep angle and other design considerations. The angle of opening and the flap area may differ from the cited above. The retaining means may include locks in the hinges.

The specific configuration and parameters of the flying wing shown above such as dihedral angle, sweep angle, taper, use of tip fins, aft or fore propeller, also may be changed by design considerations.

The landing method described with reference to the flying-wing UAV 10 and the specially designed landing flap 24 may be applied to other fixed-wing aircraft (e.g. with empennage, or to a manned aircraft). Such landing method will include a first maneuver of the UAV to assume inverted flight position, a second maneuver of the UAV to enter deep stall descent in inverted flight, and landing on the back of the UAV. The inverted flight position may be achieved as well by upward half-loop or by 180° roll. The maneuvers may be performed by conventional flight controls, even without a special flap.

## Claims

1. A method of landing a fixed-wing aircraft (10) adapted to carry a payload (22) adjacent to the lower surface of said aircraft's wing (12) or fuselage (14), said method comprising
a) first maneuver of the aircraft to assume inverted flight position;
b) second maneuver of the aircraft to enter deep stall descent in inverted flight; and
c) landing on the back of said aircraft.

2. The method of claim 1, wherein said aircraft is self-propelled and said method further comprises stopping the propeller.

3. The method of claim 1, wherein said first maneuver comprises one of the following: upward half loop, downward half loop and roll.

4. The method of claim 1, wherein said first and second maneuvers are performed with overlapping in time.

5. The method of claim 1, wherein said aircraft comprises at least one aerodynamic control surface, for example a landing flap (24), specially designed for performing said first and/or said second maneuver.

6. The method of claim 5, wherein said at least one landing flap constitutes part of the lower surface of said fixed wing.

7. The method of claim 5, wherein said aircraft is of the flying wing type.

8. The method of claim 7, wherein said landing flap has surface measuring from 25 to 35% of the flying wing surface.

9. An aerodynamic arrangement for a fixed-wing aircraft of the flying-wing type for performing landing by the method of any one of claims 1 to 8, said arrangement comprising a landing flap (24) pivotally mounted to said wing (12), said landing flap, in normal flight of said aircraft, being fixed flush with the lower surface of the wing, and being capable, when released, to assume an open position such that aerodynamic forces acting on the wing and the landing flap would bring the aircraft to an inverted position and deep-stall descent, so that said aircraft can land on its back.

10. The aerodynamic arrangement of claim 9, wherein said landing flap is formed so that, after being released, it rotates backwards to assume said open position.

11. The aerodynamic arrangement of claim 9, wherein said landing flap is formed so as to assume said open position only under the action of the incoming air flow.

12. The aerodynamic arrangement of claim 9, further comprising means (30) for stopping said landing flap in said open position.

13. The aerodynamic arrangement of claim 12, wherein said means is a flexible element (30) connecting said landing flap and said wing.

14. The aerodynamic arrangement of claim 13, wherein said flexible element is a rope (30).

15. The aerodynamic arrangement of claim 9, wherein said landing flap assumes said open position by pivoting to 140° from its normal flight position.

16. The aerodynamic arrangement of claim 9, wherein said landing flap has surface measuring from 25 to 35% of the flying wing surface.

17. The aerodynamic arrangement of claim 9, wherein said arrangement comprises a second landing flap, the two flaps being symmetrically arranged.

## Patentansprüche

1. Verfahren zum Landen eines Starrflügel-Luftfahrzeugs (10), welches eine Nutzlast (22) an der Unterseite des Flügels (12) oder des Rumpfes (14) des Luftfahrzeugs tragen kann, wobei das Verfahren umfasst
a) ein erstes Manöver des Luftfahrzeugs, bei dem es eine Rückenflugposition einnimmt;
b) ein zweites Manöver des Luftfahrzeugs, in welchem es im Rückenflug in einen Deep-Stall-Sinkflug übergeht; und
c) das Landen des Luftfahrzeugs in Rückenlage.

2. Verfahren gemäß Anspruch 1, wobei das Luftfahrzeug selbstangetrieben ist und das Verfahren außerdem den Schritt des Anhaltens des Antriebs umfasst.

3. Verfahren gemäß Anspruch 1, wobei das erste Manöver entweder einen halben Aufwärtslooping, einen halben Abwärtslooping oder eine Rolle umfasst.

4. Verfahren gemäß Anspruch 1, wobei das erste und das zweite Manöver zeitlich überlappend durchgeführt werden.

5. Verfahren gemäß Anspruch 1, wobei das Luftfahrzeug wenigstens eine aerodynamische Steuerfläche, beispielsweise eine Landeklappe (24), umfasst, die speziell zur Durchführung des ersten und/oder des zweiten Manövers konstruiert ist.

6. Verfahren gemäß Anspruch 5, wobei die wenigstens eine Landeklappe einen Teil der unteren Fläche des Starrflügels bildet.

7. Verfahren gemäß Anspruch 5, wobei das Luftfahrzeug ein Nurflügler ist.

8. Verfahren gemäß Anspruch 7, wobei die Landeklappe eine Fläche aufweist, die von 25 bis 35 % der Nurflügelfläche beträgt.

9. Aerodynamische Anordnung für ein Starrflügel-Luftfahrzeug des Nurflüglertyps zur Durchführung einer Landung gemäß dem Verfahren nach einem der Ansprüche 1 bis 8, wobei die Anordnung eine Landeklappe (24) umfasst, die schwenkbar an dem Flügel (12) montiert ist, wobei die Landeklappe im Normalflug des Luftfahrzeugs bündig mit der Unterseite des Flügels fixiert ist und nach ihrer Freigabe in der Lage ist, eine solche offene Stellung einzunehmen, dass die auf den Flügel und die Landeklappe wirkenden aerodynamischen Kräfte das Luftfahrzeug in eine Rückenflugposition und einen Deep-Stall-Sinkflug bringen, damit das Luftfahrzeug auf seinem Rücken landen kann.

10. Aerodynamische Anordnung gemäß Anspruch 9, wobei die Landeklappe so ausgebildet ist, dass sie nach ihrer Freigabe rückwärts rotiert, um die offene Stellung einzunehmen.

11. Aerodynamische Anordnung gemäß Anspruch 9, wobei die Landeklappe so geformt ist, dass sie die offene Stellung nur unter der Einwirkung des einströmenden Luftstroms einnimmt.

12. Aerodynamische Anordnung gemäß Anspruch 9, die außerdem Mittel (30) zum Halten der Landeklappe in der offenen Stellung umfasst.

13. Aerodynamische Anordnung gemäß Anspruch 12, wobei das Mittel ein flexibles Bauteil (30) ist, welches die Landeklappe und den Flügel miteinander verbindet.

14. Aerodynamische Anordnung gemäß Anspruch 13, wobei das flexible Bauteil ein Seil (30) ist.

15. Aerodynamische Anordnung gemäß Anspruch 9, wobei die Landeklappe die offene Stellung durch Schwenken um 140° ausgehend von ihrer normalen Flugposition einnimmt.

16. Aerodynamische Anordnung gemäß Anspruch 9, wobei die Landeklappe eine Fläche aufweist, die 25 bis 35 % der Nurflügelfläche beträgt.

17. Aerodynamische Anordnung gemäß Anspruch 9, wobei die Anordnung eine zweite Landeklappe umfasst, wobei die beiden Landeklappen symmetrisch angeordnet sind.

## Revendications

1. Procédé d'atterrissage d'un aéronef à aile fixe (10) adapté pour transporter une charge utile (22) à proximité de la surface inférieure de l'aile (12) ou du fuselage (14) dudit aéronef, ledit procédé comprenant :
a) une première manoeuvre de l'aéronef pour adopter une position de vol inversée ;
b) une deuxième manoeuvre de l'aéronef pour amorcer une descente en superdécrochage en mode de vol inversé ; et
c) l'atterrissage sur le dos dudit aéronef.

2. Procédé selon la revendication 1, dans lequel ledit aéronef est autopropulsé, et ledit procédé comprend en outre l'arrêt de l'hélice.

3. Procédé selon la revendication 1, dans lequel ladite première manoeuvre comprend l'une des manoeuvres suivantes : demi-boucle vers le haut, demi-boucle vers le bas et tonneau.

4. Procédé selon la revendication 1, dans lequel lesdites première et deuxième manoeuvres sont exécutées avec un chevauchement dans le temps.

5. Procédé selon la revendication 1, dans lequel ledit aéronef comprend au moins une surface de commande aérodynamique, par exemple un volet d'atterrissage (24), qui est particulièrement conçue pour exécuter ladite première et/ou ladite deuxième manoeuvre(s).

6. Procédé selon la revendication 5, dans lequel ledit au moins un volet d'atterrissage constitue une partie de la surface inférieure de ladite aile fixe.

7. Procédé selon la revendication 5, dans lequel ledit aéronef est du type aile volante.

8. Procédé selon la revendication 7, dans lequel ledit volet d'atterrissage présente une mesure de surface qui correspond à 25 % à 35 % de la surface de l'aile volante.

9. Agencement aérodynamique pour un aéronef à aile fixe du type aile volante pour exécuter un atterrissage à l'aide du procédé selon l'une quelconque des revendications 1 à 8, ledit agencement comprenant un volet d'atterrissage (24) monté de façon pivotante sur ladite aile (12), ledit volet d'atterrissage, lors d'un vol normal dudit aéronef, étant fixé à fleur de la surface inférieure de l'aile, et étant capable, lorsqu'il est desserré, d'adopter une position ouverte de telle sorte que les forces aérodynamiques qui agissent sur l'aile et sur le volet d'atterrissage amènent l'aéronef à adopter une position inversée et à amorcer une descente en superdécrochage, de telle sorte que ledit aéronef puisse atterrir sur le dos.

10. Agencement aérodynamique selon la revendication 9, dans lequel ledit volet d'atterrissage est formé de telle sorte que, après avoir été desserré, il pivote vers l'arrière pour adopter ladite position ouverte.

11. Agencement aérodynamique selon la revendication 9, dans lequel ledit volet d'atterrissage est formé de manière à adopter ladite position ouverte uniquement sous l'action du courant d'air entrant.

12. Agencement aérodynamique selon la revendication 9, comprenant en outre un moyen (30) pour bloquer ledit volet d'atterrissage dans ladite position ouverte.

13. Agencement aérodynamique selon la revendication 12, dans lequel ledit moyen est un élément flexible (30) qui relie ledit volet d'atterrissage à ladite aile.

14. Agencement aérodynamique selon la revendication 13, dans lequel ledit élément flexible est un filin (30).

15. Agencement aérodynamique selon la revendication 9, dans lequel ledit volet d'atterrissage adopte ladite position ouverte en pivotant de 140° par rapport à sa position de vol normale.

16. Agencement aérodynamique selon la revendication 9, dans lequel ledit volet d'atterrissage présente une mesure de surface qui correspond à 25 % à 35 % de la surface de l'aile volante.

17. Agencement aérodynamique selon la revendication 9, dans lequel ledit agencement comprend un deuxième volet d'atterrissage, les deux volets étant agencés de façon symétrique.
